# FASCICULE DE BREVET EUROPEEN

(11) **EP 1 738 932 B1**
(45) Date de publication et mention de la délivrance du brevet: **31.12.2008**
(21) Numéro de dépôt: 06116207.9
(22) Date de dépôt: 28.06.2006
(51) Int. Cl.: B60C 17/06

(54) **Ensemble de roulage à plat comprenant un boudin mousse et des membranes étanches perfectionnées**
Notlaufsystem mit einem wurstähnlichen Schaumstoff und verbesserten luftdichten Membranen
Run flat assembly comprising a soft insert and improved airtight membranes

(30) Priorité: 30.06.2005 FR 0506751
(43) Date de publication de la demande: 03.01.2007
(73) Titulaire: Société de Technologie Michelin, 63000 Clermont-Ferrand (FR); Michelin Recherche et Technique S.A., 1763 Granges-Paccot (CH)
(72) Inventeur: Tramond, Philippe, 63230 Saint Ours les Roches (FR); Fayol, Martial, 63530 Volvic (FR); Bor, Gérard, 63800 La Roche Noire (FR); Morel, Noël, 63530 Enval (FR)
(74) Mandataire: Lasson, Cédric Y. M.

(56) Documents cités:
- FR-A- 1 450 638

## Description

L'invention concerne les ensembles de roulage à plat destinés à équiper les véhicules automobiles. Ces ensembles comportent une jante dotée d'une valve, un pneumatique, et enferment un boudin de forme approximativement toroïdale. Ce boudin, plus communément dénommé boudin mousse, est généralement réalisé en caoutchouc alvéolaire à cellules fermées. Il est destiné à supporter la charge en cas de perte de pression du pneumatique. Les alvéoles peuvent, dans certains cas, contenir un gaz sous pression.

Des dispositifs de sécurité de ce type sont connus de l'état de la technique et de nombreuses variantes de réalisation ont été proposées. L'une d'entre elles est divulguée dans le brevet FR 1 450 638 qui en expose le principe de fonctionnement et décrit le comportement du boudin sous l'effet de la force centrifuge. Cette publication propose d'améliorer la tenue du boudin mousse sur la jante, en mettant la face radialement intérieure du boudin en contact avec la pression atmosphérique, et de faire agir la pression de gonflage sur la face radialement extérieure de ce boudin.

Pour obtenir cet effet, il est proposé d'isoler le boudin mousse dans un premier compartiment en communication avec l'atmosphère à l'aide d'une membrane souple et étanche formant une séparation avec un second compartiment porté à la pression d'utilisation.

De la différence de pression entre les deux compartiments, il résulte une force dirigée radialement vers l'intérieur agissant sur le boudin et ayant pour effet de plaquer ledit boudin sur la jante en comprimant le gaz contenu dans les alvéoles. L'action de la pression de gonflage a également pour conséquence de réduire le volume dudit boudin, ce qui permet d'éviter tout contact entre la paroi intérieure du sommet du pneumatique et le boudin mousse. Cette force s'oppose également à la force centrifuge et participe au maintien du boudin en position contre la jante, quand le véhicule atteint une vitesse élevée.

Lorsque la pression dans l'enveloppe passe en dessous d'un certain seuil, le boudin mousse reprend sa forme naturelle et occupe tout le volume intérieur de l'enveloppe, et participe au maintien du pneumatique.

Ce même brevet décrit également une forme particulière de réalisation de la valve qui est conçue de telle manière qu'elle permet de mettre en communication avec l'atmosphère le premier compartiment et de gonfler à la pression d'usage du pneumatique le second compartiment.

Il est également connu de la publication précédemment citée, des arrangements de la membrane dans lesquels l'ancrage de ladite membrane est réalisé soit :
- par collage d'un des bords de la membrane sur le flanc du boudin mousse et de l'autre bord sur la partie intérieure du bourrelet du pneumatique. Une variante de cette proposition technique consiste à prolonger les bords de la membrane le long de la paroi intérieure de l'enveloppe ou autour du boudin mousse de manière à s'affranchir des problèmes de collage sur le flanc du boudin mousse,
- par simple interposition du bord de la membrane entre le siège de la jante et le bourrelet de l'enveloppe.

Toutefois, si ces solutions techniques remplissent avec satisfaction la fonction de séparation recherchée, elles comportent quelques désavantages parmi lesquels:
- La difficulté de mise en place de la valve de gonflage liée à la nécessité de traverser la membrane tout en préservant l'étanchéité, de façon à faire parvenir l'air de gonflage dans le second compartiment,
- La modification des diamètres de la jante ou du bourrelet pour permettre d'intercaler la membrane entre le siège de la jante et le bourrelet, conduisant à une déstandardisation de ces composants.

La présente invention a pour objet de proposer des modes de réalisations améliorés de l'ancrage du bord de la membrane permettant de s'affranchir des problèmes énoncés ci-dessus.

Elle concerne les ensembles formés d'une roue comprenant une jante dotée d'une valve de gonflage, d'un pneumatique monté sur ladite jante de ladite roue, et d'un boudin mousse placé à l'intérieur du volume délimité par la paroi interne du pneumatique et la jante de la roue, dans lequel le boudin mousse est disposé dans un premier compartiment (A), en communication avec l'atmosphère par l'intermédiaire d'un conduit, et isolé par une membrane étanche du reste de l'espace intérieur de l'enveloppe du pneumatique formant un deuxième compartiment (B) étanche, communiquant avec la valve de gonflage, et gonflé à la pression d'utilisation du pneumatique.

Selon l'invention, la membrane forme une liaison étanche directement avec la j ante.

A cet effet, la jante comporte au moins une portée circulaire, distincte des sièges de jantes destinés à recevoir les bourrelets du pneumatique, et située axialement à l'intérieur de l'espace compris entre les deux sièges. La portée circulaire est située sensiblement à proximité desdits sièges de jante dans l'espace compris axialement entre chacun des sièges de jante et la zone de la jante destinée à recevoir le boudin mousse. Au moins un des bords de la membrane forme une liaison étanche avec la portée circulaire.

L'ancrage de la membrane s'effectuant directement sur la jante, il est possible de disposer le conduit d'amenée d'air de la valve de manière à ce qu'il débouche directement de la jante dans le second compartiment, ce qui évite toute traversée de la dite membrane. Ainsi les opérations de montage et de démontage s'en trouvent grandement facilitées. De plus il n'est pas nécessaire de modifier les diamètres du siège de la jante, ni de celui du pneumatique, dés lors que la portée circulaire sur laquelle le bord de la membrane repose de manière étanche se distingue du siège sur lequel repose le bourrelet du pneumatique.

De manière à augmenter l'effet lié à la pression sur le boudin mousse, il est intéressant de disposer l'ancrage des membranes sur la jante au plus près des sièges destinés à recevoir les bourrelets du pneumatique pour bénéficier d'une surface d'appui du boudin sur la jante la plus élevée possible.

La forme et la disposition du bord de la membrane étanche en contact avec la jante peuvent faire l'objet, selon l'invention, de modes de réalisation différents que la description qui suit permettra de mieux comprendre en s'appuyant sur les figures 1 à 8 dans lesquelles :
- la figure 1 représente une vue en coupe radiale d'un ensemble conforme à l'invention en mode gonflé,
- la figure 2 représente une vue en coupe radiale d'une variante de réalisation de l'ensemble précédent comportant une membrane séparée en deux parties,
- la figure 3 représente une vue en coupe radiale de l'ensemble précédent en mode dégonflé,
- la figure 4 représente une vue en coupe radiale d'une première variante de réalisation de l'invention dans laquelle un des deux bords de la membrane est collé contre la partie interne du bourrelet du pneumatique,
- les figures 5, 6 et 7 représentent des vues en coupe radiale de différentes variantes de réalisation de la liaison du bord de la membrane avec la jante,
- La figure 8 représente une vue en coupe radiale d'une variante de réalisation de l'invention sur une jante à siège orienté vers l'intérieur.

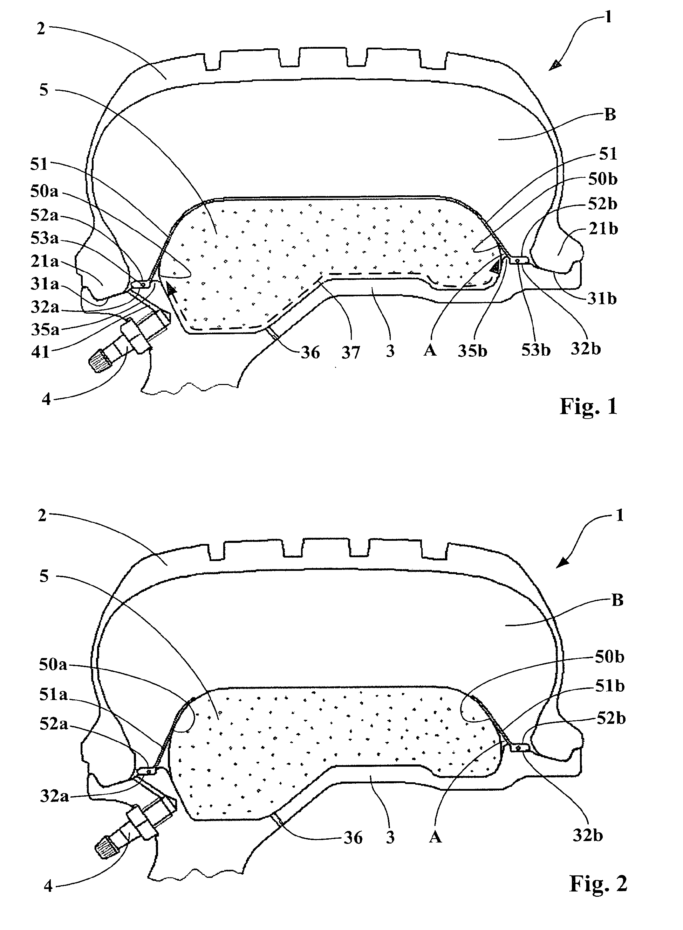

L'ensemble 1, représenté à la figure 1, est formé d'une roue comprenant une jante 3 dotée d'une valve 4, d'un pneumatique 2 monté sur la jante 3 et d'un boudin mousse 5, placé dans l'espace intérieur délimité par la paroi interne du pneumatique 2 et la jante 3 de la roue. Les bourrelets 21a et 21b du pneumatique 2 reposent sur les sièges 31a et 31b de la jante 3. Une membrane étanche 51 de forme sensiblement toroïdale est disposée de manière à assurer la séparation entre les deux compartiments A et B.

La membrane 51 est placée sur la partie radialement supérieure du boudin mousse 5. Les bords 52a et 52b de la membrane 51 reposent sur les portées circulaires 32a et 32b réalisées sur la jante 3. Les portées circulaires 32a et 32b sont situées axialement dans l'espace compris entre les sièges 31a et 31b. Chacune des portées circulaires 32a et 32b est placée axialement dans l'espace compris entre le siège de jante, respectivement 31a et 31b, et la zone 37 de la jante 3 destinée à recevoir le boudin mousse. Cette zone 37, visualisée par un trait en pointillé sur la figure 1, correspond à la zone de contact entre la jante et le boudin mousse.

La membrane 51 permet ainsi d'isoler de manière étanche les compartiments A et B.

Le compartiment A est en communication avec la pression atmosphérique par l'intermédiaire de l'orifice 36. La valve 4 est prolongée par un conduit 41 permettant d'introduire de l'air sous pression dans le compartiment B. On observera que cette disposition particulière de la membrane 51 permet de faire communiquer la sortie du conduit 41 directement avec le second compartiment B sans qu'il soit nécessaire de disposer d'un moyen permettant de traverser ladite membrane.

La figure 2 représente une variante de réalisation de la membrane selon laquelle la membrane 51 est séparée en deux parties 51a et 51b dont les bords axialement internes sont collés de manière étanche respectivement sur chacun des flancs 50a, 50b du boudin mousse 50. On observera dans ces conditions, qu'il est nécessaire que la paroi externe du boudin mousse soit elle-même être étanche à l'air, de manière à ce que l'air contenu dans le compartiment B ne puisse pas diffuser au travers du boudin mousse. Cet effet technique est généralement obtenu en utilisant des matériaux à base de polybutadiène comme cela est couramment le cas pour la réalisation desdits boudins mousses.

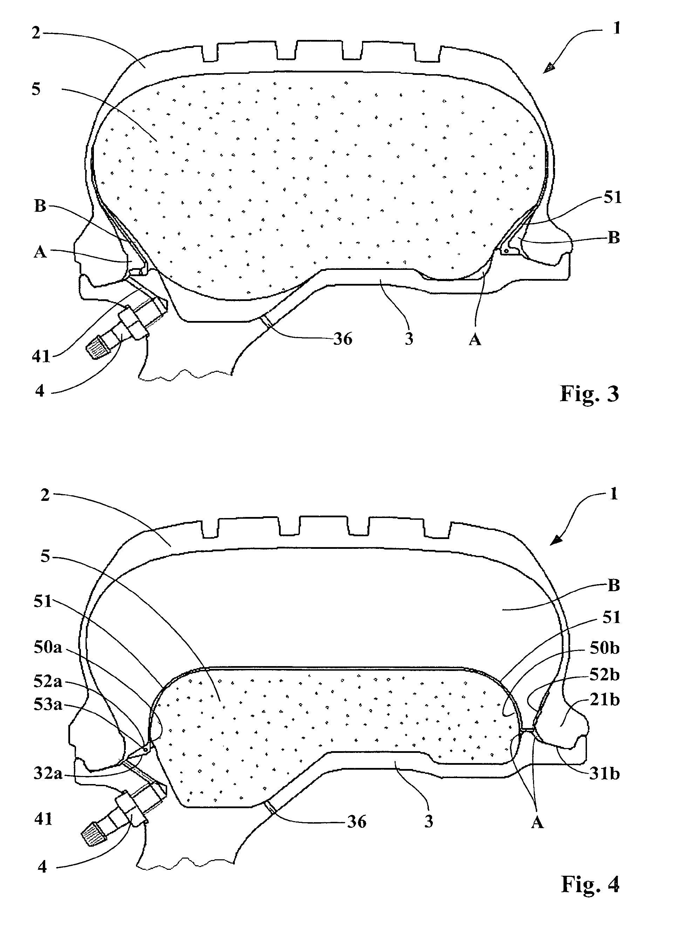

La mise sous pression du compartiment B provoque la compression du boudin mousse 5 comme cela est illustré sur la figure 1 ou 2. Le compartiment A reste à la pression atmosphérique. La figure 3 illustre le cas où une perte de pression se produit dans le second compartiment B. Le boudin mousse 5 occupe alors tout le volume de l'espace intérieur.

On remarquera qu'il est nécessaire que la membrane 51 puisse de déployer suffisamment pour venir se plaquer contre la paroi intérieure du pneumatique 2 et ne pas entraver l'expansion du boudin mousse. Cet effet est obtenu en réalisant la membrane à l'aide d'un matériau souple et élastique ou, de manière alternative en utilisant un matériau souple et non élastique. Dans cette deuxième configuration, la dimension de la membrane devra être ajustée à la dimension de la surface intérieure du pneumatique.

L'étanchéité entre les bords 52a et 52b de la membrane 51 et la portée circulaire32a, 32b est assurée par collage ou serrage desdits bords sur la portée circulaire. Ce dernier arrangement étant préférable en raison de sa facilité de mise en oeuvre et du fait de son caractère démontable.

Le serrage des bords 52a et 52b de la membrane 51 sur les portées 32a et 32b peut être amélioré en incorporant un renfort circulaire 53a, 53b dans le bord 52a, 52b de la membrane 51. Ce renfort circulaire 53a, 53b peut être formé à partir d'un ou plusieurs fils de renforts textiles ou métalliques présentant une forte résistance à l'allongement. Il est aussi possible de donner une légère conicité aux portées 32a et 32b de manière à favoriser le serrage.

Il peut être également judicieux de prévoir des butées 35a et 35b permettant de limiter le déplacement axial des bords 52a et 52b de la membrane et susceptibles de provoquer une perte d'étanchéité.

La figure 4 représente une autre forme d'arrangement dans lequel seul un bord 52a de la membrane 51 est lié de manière étanche à la jante. L'autre bord 52b de la membrane 51 est collé sur la paroi intérieure du bourrelet 21b du pneumatique 2. On choisira de coller de préférence le bord 52b de la membrane 51 opposé au bord où se situe la valve de gonflage 4 de manière à permettre à l'orifice 41 de déboucher directement dans le second compartiment B. Ce mode de réalisation peut s'avérer intéressant pour faciliter l'opération de montage et de démontage.

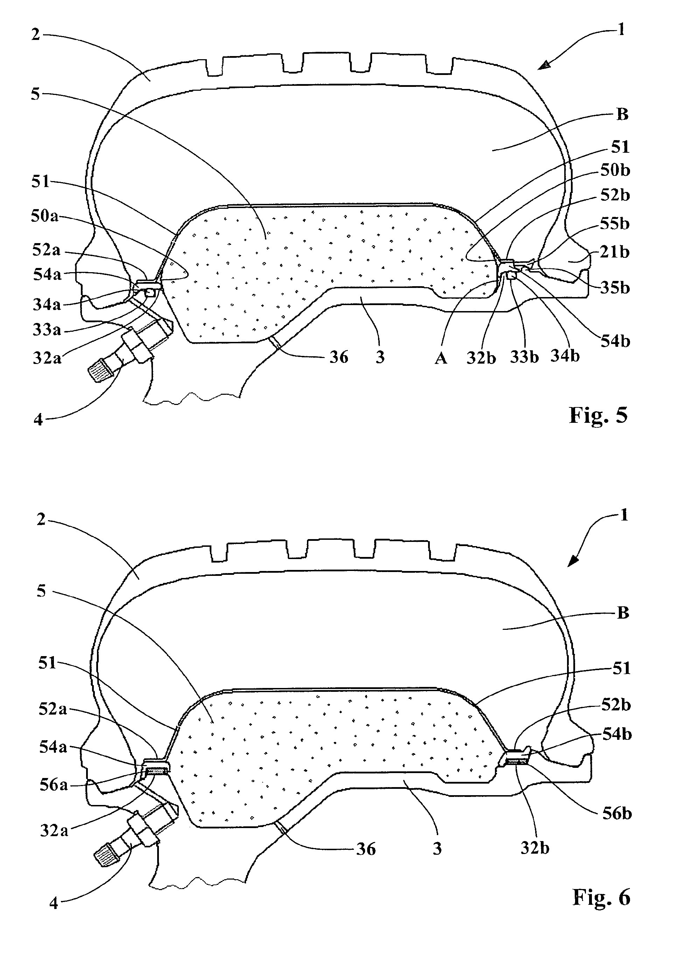

La liaison étanche entre les bords 51a, 51b de la membrane 51 et les portées circulaires 32a, 32b peuvent également faire l'objet de variantes de réalisation de l'invention illustrées sur les figures 5, 6 et 7.

La figure 5 illustre le cas dans lequel le bord 52a, 52b est collé sur la portée radialement supérieure d'un anneau circulaire 54a, 54b. Cet anneau circulaire joue à la fois un rôle de renfort et de liaison. La portée circulaire 32a, 32b comporte une gorge 33a, 33b dans laquelle est disposée un joint torique 34a, 34b, Le diamètre de la portée radialement inférieure de l'anneau circulaire est ajusté pour former une liaison étanche avec le joint torique 34a, 34b.

On remarquera également une autre forme de réalisation de la butée 35b dans laquelle l'anneau circulaire 54b comprend une attache 55b qui vient se fixer sur une butée 35b située axialement à l'extérieur de la portée 32b. L'attache 55b tout en permettant de limiter la course axiale du bord 52b de la membrane 51, est entraîné par le mouvement du bourrelet 21b lors de l'opération de démontage ce qui rend d'autant plus aisée cette opération.

La figure 6 propose une deuxième variante de réalisation de la liaison étanche, dans laquelle le bord 52a, 52b de la membrane 51 est également collé sur la portée radialement supérieure de l'anneau circulaire 54a, 54b. Ledit anneau circulaire 54a, 54b comporte un joint circulaire 56a, 56b fixé sur sa portée radialement interne. Le joint 54a, 54b a pour fonction d'assurer l'étanchéité par serrage sur la portée circulaire 32a, 32b.

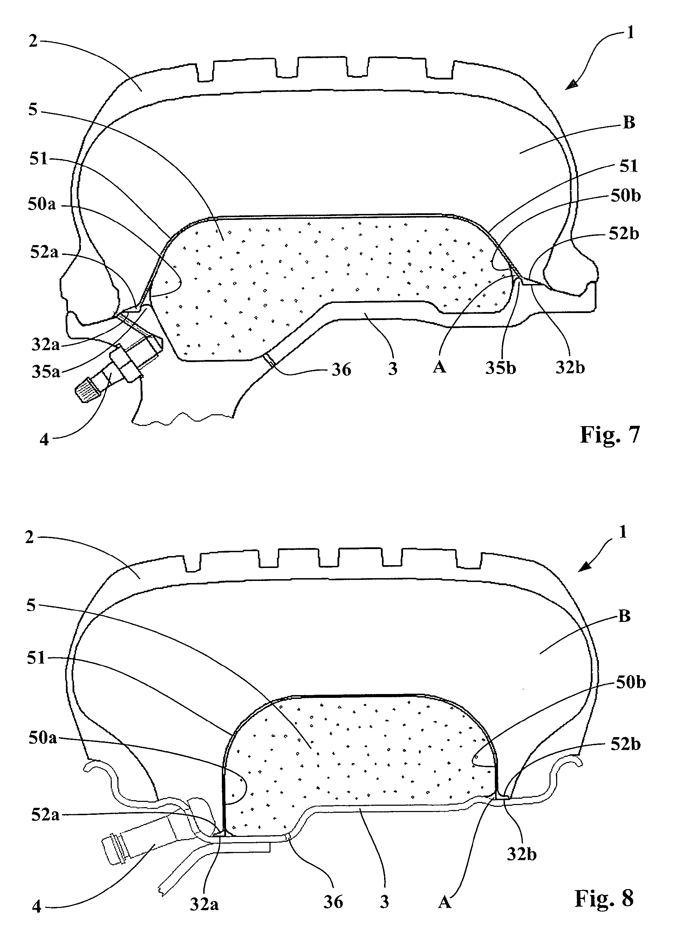

La figure 7 propose une troisième variante de réalisation dans laquelle les bords 52a, 52b de la membrane 51 sont élastiques. L'étanchéité avec la portée circulaire 32a, 32b est assurée par la combinaison de la force élastique de serrage du bord 52a, 52b sur la portée 32a, 32b et par les forces de pression s'exerçant sur la surface du bord 52a, 52b. La force élastique de serrage et la surface de contact entre la portée 32a, 32b et le bord 52a, 52b de la membrane 51 doivent être adaptées pour assurer un serrage étanche et pour s'opposer aux effets de la force centrifuge quelle que soit la vitesse de roulage du véhicule.

On observera que les jantes des roues présentées sur les figures 1 à 7 ont des sièges inclinés vers l'extérieur tel que cela est décrit par exemple dans le brevet EP 637 324. Ces sièges ont également des diamètres différents.

Ce type d'ensemble est particulièrement bien adapté pour le roulage à pression réduite et permet d'alléger les opérations de montage et de démontage du pneumatique et du boudin mousse comportant des membranes dont les bords comprennent un renfort circulaire. Toutefois, l'invention n'est pas limitée à ce type d'ensemble et peut également être mise en oeuvre sur un ensemble formé à partir d'une roue comportant des sièges de jante classiques, inclinés vers l'intérieur, et adaptés pour recevoir les pneumatiques les plus courrant comme cela est illustré sur la figure 8.

Toutes ces formes de réalisation concernant la forme de la membrane (51, 51a, 51b), ou la forme de la liaison étanche entre le bord (52a, 52b) de la membrane et la portée circulaire (32a, 32b) peuvent être combinées deux à deux, sans se départir de l'esprit de l'invention, en fonction des avantages particuliers qu'elles peuvent représenter.

## Revendications

1. Ensemble (1) formé d'une roue comprenant un pneumatique (2), une jante (3) dotée d'une valve de gonflage (4) et de sièges de jantes (31a, 31b) destinés à recevoir les bourrelets (21a, 21b) du pneumatique (2), et d'un boudin mousse (5) placé à l'intérieur du volume délimité par la paroi interne du pneumatique (2) et la jante (3) de la roue, dans lequel le boudin mousse (5) est disposé dans un premier compartiment (A), en communication avec l'atmosphère par l'intermédiaire d'un conduit (36), et isolé de manière étanche par une membrane souple (51, 51a, 51b) du reste de l'espace intérieur (B) de l'enveloppe du pneumatique, lequel espace forme un deuxième compartiment (B), communiquant avec la valve de gonflage (4, 41), et destiné à être gonflé à la pression d'utilisation du pneumatique, ensemble **caractérisé en ce que** au moins un des bords de la membrane (52a, 52b) forme une liaison étanche avec la jante (3) le long d'une portée circulaire (32a, 32b), distincte des sièges (31a, 31b) de la jante (3) et située axialement dans l'espace compris entre un siège de jante (31a, 31b) et la zone (37) de la jante (3) destinée à recevoir le boudin mousse (5).

2. Ensemble selon la revendication 1 dans lequel, le bord (52a, 52b) de la membrane (51, 51a, 51b) en contact avec la portée circulaire (32a, 32b) comporte un renfort circulaire (53a, 53b, 54a, 54b) dont le diamètre est adapté pour renforcer le serrage dudit bord (52a, 52b) de la membrane (51, 51a, 51b) sur la portée circulaire (32a, 32b).

3. Ensemble selon la revendication 2 dans lequel, le bord (52a, 52b) de la membrane (51, 51a, 51b) est collé sur la portée radialement supérieure d'un anneau circulaire (54a, 54b).

4. Ensemble selon la revendication 3 dans lequel, la portée circulaire (32a, 32b) comporte une gorge (33a, 33b) dans laquelle est disposé un joint torique (34a, 34b) formant une liaison étanche avec la portée radialement inférieure de l'anneau circulaire (54a, 54b).

5. Ensemble selon la revendication 1 dans lequel, le bord (52a, 52b) de la membrane (51, 51a, 51b) en contact avec la portée circulaire (32a, 32b) a un module d'élasticité et une surface adaptée pour assurer une liaison étanche entre ledit bord (52a, 52b) et la portée circulaire (32a, 32b).

6. Ensemble selon la revendication 1 dans lequel, le bord (52a, 52b) de la membrane (51, 51a, 51b) est collé sur la portée circulaire (32a, 32b).

7. Ensemble selon l'une des revendications 1 à 6 dans lequel la portée circulaire (32a, 32b) comporte une butée (35a, 35b,) permettant de limiter le déplacement axial du bord (52a, 52b) de la membrane (51, 51a, 51b) en contact avec la portée circulaire (32a, 32b).

8. Ensemble selon l'une des revendications 1 à 7 dans lequel la jante comporte deux portées circulaires (32a, 32b) situées axialement de part et d'autre de la zone (37) de la jante (3) destinée à recevoir le boudin mousse, et assurant la liaison étanche avec chacun des bords (52a, 52b) de la membrane (51, 51a,51b).

9. Ensemble selon l'une des revendications 1 à 7 dans lequel, un des deux bords (52b) de la membrane (51) est collé sur la paroi interne du bourrelet (21b) du pneumatique (2).

10. Ensemble selon la revendication 9 dans lequel le bord (52b) de la membrane (51) collé sur la paroi interne du bourrelet (21b) est situé axialement sur le coté opposé au coté comportant l'orifice de la valve de gonflage (4) débouchant dans le second compartiment (B).

11. Ensemble selon l'une des revendications 1 à 10 dans lequel la membrane (51a, 51b) est séparée en deux parties, dont les bords axialement internes sont collés de manière étanche sur chacun des flancs (50a, 50b) du boudin mousse (5).

## Claims

1. An assembly (1) formed of a wheel comprising a tyre (2), a rim (3) equipped with an inflation valve (4) and rim seats (31a, 31b) designed to receive the beads (21a, 21b) of the tyre (2), and a foam insert (5) placed inside the volume defined by the internal wall of the tyre (2) and the wheel rim (3), in which assembly the foam insert (5) is disposed in a first compartment (A) in communication with the atmosphere via a duct (36) and isolated in airtight manner by a flexible membrane (51, 51a, 51b) from the rest of the space (B) inside the tyre casing, which space forms a second compartment (B) in communication with the inflation valve (4, 41) and designed to be inflated to the utilisation pressure of the tyre, said assembly being **characterised in that** at least one of the edges of the membrane (52a, 52b) forms an airtight joint with the rim (3) along a circular bearing surface (32a, 32b), separate from the seats (31a, 31b) of the rim (3) and situated axially inside the space between a rim seat (31a, 31b) and the zone (37) of the rim (3) designed to receive the foam insert (5).

2. An assembly according to claim 1, in which the edge (52a, 52b) of the membrane (51, 51a, 51b) in contact with the circular bearing surface (32a, 32b) comprises a circular reinforcement (53a, 53b, 54a, 54b), the diameter of which is adapted to reinforce clamping of said edge (52a, 52b) of the membrane (51, 51a, 51b) on the circular bearing surface (32a, 32b).

3. An assembly according to claim 2, in which the edge (52a, 52b) of the membrane (51, 51a, 51b) is adhesively bonded to the radially upper bearing surface of a circular ring (54a, 54b).

4. An assembly according to claim 3, in which the circular bearing surface (32a, 32b) comprises a groove (33a, 33b) in which is disposed an O-ring seal (34a, 34b) forming an airtight joint with the radially lower bearing surface of the circular ring (54a, 54b).

5. An assembly according to claim 1, in which the edge (52a, 52b) of the membrane (51, 51a, 51b) in contact with the circular bearing surface (32a, 32b) has a modulus of elasticity and a surface adapted to ensure an airtight joint between said edge (52a, 52b) and the circular bearing surface (32a, 32b).

6. An assembly according to claim 1, in which the edge (52a, 52b) of the membrane (51, 51a, 51b) is adhesively bonded to the circular bearing surface (32a, 32b).

7. An assembly according to any one of claims 1 to 6, in which the circular bearing surface (32a, 32b) comprises a limit stop (35a, 35b) which makes it possible to limit axial displacement of the edge (52a, 52b) of the membrane (51, 51a, 51b) in contact with the circular bearing surface (32a, 32b).

8. An assembly according to any one of claims 1 to 7, in which the rim comprises two circular bearing surfaces (32a, 32b) situated axially on either side of the zone (37) of the rim (3) designed to receive the foam insert, and ensuring the airtight joint with each of the edges (52a, 52b) of the membrane (51, 51a,51b).

9. An assembly according to any one of claims 1 to 7, in which one of the two edges (52b) of the membrane (51) is adhesively bonded to the internal wall of the bead (21b) of the tyre (2).

10. An assembly according to claim 9, in which the edge (52b) of the membrane (51) adhesively bonded to the internal wall of the bead (21b) is situated axially on the opposite side from the side comprising the orifice of the inflation valve (4) leading into the second compartment (B).

11. An assembly according to any one of claims 1 to 10, in which the membrane (51a, 51b) is separated into two parts, whose axially inner edges are adhesively bonded in airtight manner to each of the sidewalls (50a, 50b) of the foam insert (5).

## Patentansprüche

1. Anordnung (1), gebildet aus einem Rad, das einen Reifen (2), eine Felge (3), die mit einem Füllventil (4) und mit Felgensitzen (31a, 31b) zur Aufnahme der Randwulste (21a, 21b) des Reifens (2) ausgestattet ist, und einen Schaumkranz (5), der im Inneren des von der Innenwand des Reifens (2) und der Felge (3) des Rads abgrenzten Volumens angeordnet ist, aufweist, wobei der Schaumkranz (5) in einer ersten Abteilung (A) angeordnet ist, die über eine Leitung (36) mit der Atmosphäre kommuniziert und durch eine weiche Membran (51, 51a, 51b) auf dichte Weise vom Rest des Innenraums (B) des Mantels des Reifens isoliert ist, wobei der Raum eine zweite Abteilung (B) bildet, die mit dem Füllventil (4, 41) kommuniziert und dazu dient, auf den Verwendungsdruck des Reifens befüllt zu werden, wobei die Anordnung **dadurch gekennzeichnet ist, dass** mindestens einer der Ränder der Membran (52a, 52b) eine dichte Verbindung mit der Felge (3) entlang einer kreisförmigen Auflage (32a, 32b) bildet, die sich von den Sitzen (31a, 31b) der Felge (3) unterscheidet und axial in jenem Raum angeordnet ist, der zwischen einem Felgensitz (31a, 31b) und dem Bereich (37) der Felge (3), der dazu dient, den Schaumkranz (5) aufzunehmen, enthalten ist.

2. Anordnung nach Anspruch 1, wobei der Rand (52a, 52b) der Membran (51, 51a, 51b), der in Kontakt zur kreisförmigen Auflage (32a, 32b) steht, eine kreisförmige Verstärkung (53a, 53b, 54a, 54b) aufweist, deren Durchmesser angepasst ist, um die Festspannung des Rands (52a, 52b) der Membran (51, 51a, 51b) an der kreisförmigen Auflage (32a, 32b) zu verstärken.

3. Anordnung nach Anspruch 2, wobei der Rand (52a, 52b) der Membran (51, 51a, 51b) radial oberhalb eines kreisförmigen Rings (54a, 54b) an der Auflage angeklebt ist.

4. Anordnung nach Anspruch 3, wobei die kreisförmige Auflage (32a, 32b) eine Rille (33a, 33b) aufweist, in der ein O-Ring (34a, 34b) angeordnet ist, der radial unterhalb des kreisförmigen Rings (54a, 54b) mit der Auflage eine dichte Verbindung bildet.

5. Anordnung nach Anspruch 1, wobei der Rand (52a, 52b) der Membran (51, 51a, 51b), der in Kontakt zur kreisförmigen Auflage (32a, 32b) steht, einen Elastizitätsmodul und eine Oberfläche aufweist, die dazu geeignet sind, eine dichte Verbindung zwischen dem Rand (52a, 52b) und der kreisförmigen Auflage (32a, 32b) sicherzustellen.

6. Anordnung nach Anspruch 1, wobei der Rand (52a, 52b) der Membran (51, 51a, 51b) an der kreisförmigen Auflage (32a, 32b) angeklebt ist.

7. Anordnung nach einem der Ansprüche 1 bis 6, wobei die kreisförmige Auflage (32a, 32b) einen Anschlag (35a, 35b) aufweist, der eine Eingrenzung der axialen Bewegung des Rands (52a, 52b) der Membran (51, 51a, 51b), der in Kontakt zur kreisförmigen Auflage (32a, 32b) steht, ermöglicht.

8. Anordnung nach einem der Ansprüche 1 bis 7, wobei die Felge zwei kreisförmige Auflagen (32a, 32b) aufweist, die axial an der einen und der anderen Seite des Bereichs (37) der Felge (3), der der Aufnahme des Schaumkranzes dient, angeordnet sind und die dichte Verbindung mit jedem der Ränder (52a, 52b) der Membran (51, 51a, 51b) sicherstellen.

9. Anordnung nach einem der Ansprüche 1 bis 7, wobei einer der beiden Ränder (52b) der Membran (51) an der Innenwand der Randwulst (21b) des Reifens (2) angeklebt ist.

10. Anordnung nach Anspruch 9, wobei der Rand (52b) der Membran (51), der an der Innenwand der Randwulst (21b) angeklebt ist, an jener Seite axial angeordnet ist, die der Seite, die die in die zweite Abteilung (B) mündende Öffnung des Füllventils (4) aufweist, gegenüberliegt.

11. Anordnung nach einem der Ansprüche 1 bis 10, wobei die Membran (51a, 51b) in zwei Abschnitte unterteilt ist, deren axial innen liegende Ränder auf dichte Weise an jeder der Flanken (50a, 50b) des Schaumkranzes (5) angeklebt sind.
